# EUROPEAN PATENT APPLICATION

(11) **EP 4 800 995 A1**
(43) Date of publication of application: **02.09.2026**
(21) Application number: 25160856.8
(22) Date of filing: 28.02.2025
(51) Int. Cl.: H04L 41/0823, H04L 41/16, H04W 24/02, H04L 41/046

(54) **METHOD, APPARATUS, TELECOMMUNICATIONS NETWORK FOR PROCESSING PROMPTS**

(71) Applicant: Deutsche Telekom AG, 53113 Bonn (DE)
(72) Inventor: BLICKER, Stephan, 53343 Wachtberg (DE)
(74) Representative: 2SPL Patentanwälte PartG mbB

(57) **Abstract**

Provided is a method for determining an action in a telecommunications network. The method includes receiving, by a prompt gateway, a first prompt corresponding to a request of a client in the network. The method further includes identifying, based on the first prompt, at least one action to be taken for at least one of a UE or at least one network layer. The method further includes generating, by the prompt gateway, at least one second prompt for at least one of the UE or a network layer agent provided for the at least one network layer for invoking the at least one action.

## Description

### Field

The present disclosure relates to a method, an apparatus, and a telecommunications network for intent-based communication.

### Background

A 6G network is planned as the next-generation of wireless communication technology expected to succeed 5G around 2030. It aims to deliver ultra-low latency, very high data rates (up to 1 Tbps), and seamless global connectivity. 6G may integrate advanced technologies like Al, quantum communication, and terahertz (THz) frequencies for improved performance. It may support applications such as holographic communication, immersive extended reality (XR), and large-scale loT ecosystems. With a focus on sustainability and security, 6G is designed to meet future demands for smart cities, autonomous systems, and global digital services. In 6G networks, intent based communication may be utilized for different communication scenarios. Intent based communication may complement classic protocol stack communication between the UE and network components

Thus, there may be a demand for technologies that accommodate such visions.

### Summary

This demand may be satisfied by the subject-matter of the independent claims. Further aspects are set forth in the dependent claims, the drawings, and the following description.

According to a first aspect, the disclosure provides a method for determining an action in a telecommunications network. The method comprises receiving, by a prompt gateway, a first prompt corresponding to a request of a client in the network. The method further comprises identifying, based on the first prompt, at least one action to be taken for at least one of a UE or at least one network layer. The method further comprises generating, by the prompt gateway, at least one second prompt for at least one of the UE or a network layer agent provided for the at least one network layer for invoking the at least one action.

Thereby, an efficient way of answering the request may be determined.

In some examples, each network layer is provided with a network layer agent and the generating of the at least one second prompt comprises generating a respective second prompt for all or a subset of the network layer agents.

Thereby, specifically tailored prompts for the different layers may be generated to further improve efficiency.

In some examples, the prompt gateway is configured to invoke a large language model for at least one of the identifying the at least one action and generating the at least one second prompt.

Thereby, multimodal inputs may be processed. Also, natural language may be processed and the action may be determined in accordance with a user intent.

In some example, the method further comprises determining a processing chain of the at least one second prompt. The processing chain indicates an order of network layer agents to process the at least one second prompt.

Thereby, efficiency may be further enhanced.

In some examples, the processing chain is determined by a management network layer agent (or provisioning agent) provided for a management network layer.

Thereby, a different model (for task chaining) may be utilized, thus increasing accuracy of the task chaining.

In some examples, the at least one network layer agent is based on a machine-learning model.

Thereby, similar effects as for the other examples may be achieved.

In some examples, the first prompt is generated based on an intent of the UE.

Thereby, intent-based communication may be provided.

According to a second aspect, the disclosure provides a method for user equipment (UE). The method comprises generating, based on a service request of the UE, a prompt for a prompt gateway of a telecommunications network for determining at least one action in the telecommunications network.

Thereby, similar effects as for the other aspects and examples may be provided. It should be noted that the examples given for the first aspect may also be applicable to the second aspect.

According to a third aspect, the disclosure provides a method for adjusting at least one setting in a telecommunications network. The method comprises receiving a first prompt corresponding to at least one performance parameter of the telecommunications network. The method further comprises determining, based on the first prompt, if at least one adjustment should be carried out at at least one network layer. The method further comprises, if it is determined that the at least one adjustment should be carried out, generating a second prompt for a network layer agent provided for the at least one network layer. The method further comprises instructing, using the second prompt, the network layer agent to carry out the at least one adjustment in the at least one network layer.

Thereby, the network may optimize itself without human intervention. It should be noted that the examples given for the first aspect may also be applicable to the third aspect.

According to a fourth aspect, the disclosure provides an apparatus for determining an action in a telecommunications network, the apparatus comprising processing circuitry configured to carry out the method according to the first aspect or any example relating to the first aspect.

Thereby, similar effects as described for the first aspect may be achieved.

According to a fifth aspect, the disclosure provides a telecommunications network comprising an apparatus according to the fourth aspect.

Thereby, similar effects as described for the first aspect may be achieved.

According to a sixth aspect, the disclosure provides an apparatus for a UE. The apparatus comprises processing circuitry configured to carry out the method according to the second aspect.

Thereby, similar effects as described for the first aspect may be achieved.

According to a seventh aspect, the disclosure provides a user equipment comprising an apparatus for a user equipment according to the sixth aspect.

Thereby, similar effects as described for the first aspect may be achieved.

According to an eighth aspect, the disclosure provides an apparatus for adjusting at least one setting in a telecommunications network. The apparatus comprises processing circuitry configured to carry out the method according to the third aspect.

Thereby, similar effects as described for the first aspect may be achieved.

According to a ninth aspect, the disclosure provides a telecommunications network comprising an apparatus according to the eighth aspect.

According to a tenth aspect, the disclosure provides a computer program comprising instructions which, when the program is carried out on a computer, causes the computer to carry out the method according to the first aspect or any example relating to the first aspect.

According to an eleventh aspect, the disclosure provides a computer program comprising instructions which, when the program is carried out on a computer, causes the computer to carry out the method according to the second aspect or any example relating to the second aspect.

According to a twelfth aspect, the disclosure provides a computer program comprising instructions which, when the program is carried out on a computer, causes the computer to carry out the method according to the third aspect or any example relating to the third aspect.

According to a thirteenth aspect, the disclosure provides a non-transitory computer readable medium comprising instructions which, when carried out by processing circuitry, causes the processing circuitry to carry out the method according to the first aspect or any example relating to the first aspect.

According to a fourteenth aspect, the disclosure provides a non-transitory computer readable medium comprising instructions which, when carried out by processing circuitry, causes the processing circuitry to carry out the method according to the second aspect or any example relating to the second aspect.

According to a fifteenth aspect, the disclosure provides a non-transitory computer readable medium comprising instructions which, when carried out by processing circuitry, causes the processing circuitry to carry out the method according to the third aspect or any example relating to the third aspect.

### Brief description of the Figures

Some examples of apparatuses and/or methods will be described in the following by way of example only, and with reference to the accompanying figures, in which
Fig. 1 depicts a flowchart of a method for determining an action in a telecommunications network according to the present disclosure;
Fig. 2 depicts a flowchart of a method for user equipment according to the present disclosure;
Fig. 3 depicts a flowchart of a method for adjusting at least one parameter in a telecommunications network according to the present disclosure;
Fig. 4 depicts a block diagram of a telecommunications network according to the present disclosure;
Fig. 5 depicts a block diagram of a telecommunications network according to the present disclosure;
Fig. 6 depicts a network agent according to the present disclosure;
Fig. 7 depicts a method for task chaining according to the present disclosure;
Fig. 8 depicts a white box diagram of a network agent according to the present disclosure; and
Fig. 9 depicts a sequence diagram of a method according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

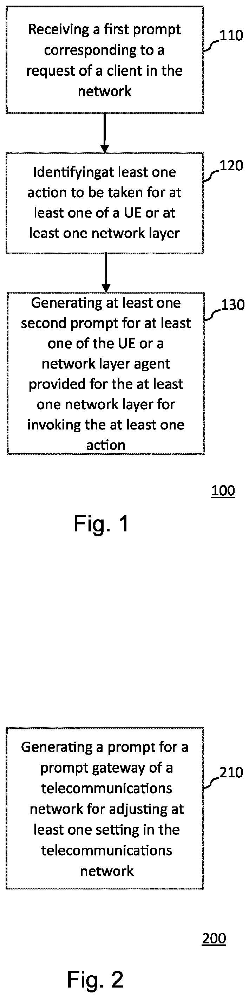

Fig. 1 depicts a flowchart of a method 100 for determining an action in a telecommunications network. A telecommunications network may refer to a system of interconnected nodes and transmission channels that enable exchange of information between devices over long distances. It may be configured to carry different types of data, such as voice, video, and text, using wired or wireless technologies. Core components may include user terminals (or user equipment, UE), switching systems, transmission media, and network protocols to ensure seamless communication. The telecommunications network may be structured in layers to manage data flow efficiently, with examples including telephone networks, cellular networks, and the internet. Such networks may play a crucial role in global connectivity, supporting both personal communication and critical infrastructure for industries.

While the following explanations are given with respect to a sixth generation (6G) 3GPP (third generation partnership project) network, this should be understood merely as an example and the present disclosure is not limited in that regard. Generally, the principles of the present disclosure may be applicable to any programmable/dynamic network architecture. According to the present disclosure, an agentic approach is presented and, in a specific example, for each network layer, a respective agent may be provided. A gateway agent may be used to receive information or data relating to the network or to a network participant in the form of one or multiple prompts, and further to tailor specific prompts for the respective agents of the respective network layers. A prompt may relate to an input or instruction for a machine-learning model (or an artificial intelligence, AI) to generate a specific output (in the context of the present disclosure: a second prompt). It may be a question, a command, contextual description, or the like, to set the direction for a specific task. The quality and clarity of the prompt may influence the relevance and accuracy of the Al's response. Hence, the task of the gateway agent (also referred to as prompt gateway) may be to output prompts for the respective other agents with high quality (and clarity). To do so, the gateway agent may invoke a large language model (LLM), but the present disclosure is not limited in that regard. An LLM may refer to an Al system trained on vast amounts of text data to understand and generate (human-like, or other) language. It may be based on deep learning, such as neural networks, e.g., with billions of parameters, to predict and create responses. For example, if the prompt derives from a UE based on speech of a user of the UE, the LLM may be used to understand an intent of the user. On the other hand, if the prompt corresponds to at least one network parameter or is generated by an application of a UE, or is generated by a different agent, or any other client of the gateway, a different model than an LLM may be used which may be more specific to the prompt. However, also in such cases, an LLM may be used.

To provide an agent according to the present disclosure, a machine-learning model may be employed. Each agent may be trained based on a different model or for a different purpose or training may be similar for two different agents. In general, a machine-learning (or machine-learned) model may refer to a data structure and/or set of rules representing a statistical model that is used to determine an output. The data structure and/or set of rules may represent learned knowledge (e.g. based on training performed by a machine-learning algorithm as described herein). In machine-learning, instead of a rule-based transformation of data, a transformation of data may be used, that is inferred from an analysis of training data.

The machine-learning model may be trained based on a machine-learning algorithm. The term "machine-learning algorithm" may denote a set of instructions that are used to create, train or use a machine-learning model. For the machine-learning model to determine an output, the machine-learning model may be trained using training data. By training the machine-learning model with a large set of training data, the machine-learning model may learn to determine the output. In other words, by training the machine-learning model, the machine-learning model may learn a transformation between input data and appropriate output data.

The machine-learning model may be trained using training input data. For example, the machine-learning model may be trained using a training method called "supervised learning". In supervised learning, the machine-learning model may be trained using a plurality of training samples, wherein each sample may include a plurality of input data values, and a plurality of desired output values, i.e., each training sample is associated with a desired output value. By specifying both training samples and desired output values, the machine-learning model may learn which output value to provide based on an input sample that is similar to the samples provided during the training.

Apart from supervised learning, semi-supervised learning may be used. In semi-supervised learning, some of the training samples lack a corresponding desired output value. Supervised learning may be based on a supervised learning algorithm (e.g. a classification algorithm or a similarity learning algorithm). Classification algorithms may be used as the desired outputs of the trained machine-learning model are restricted to a limited set of values (categorical variables), i.e., the input may be classified to one of the limited set of values. Similarity learning algorithms are similar to classification algorithms but are based on learning from examples using a similarity function that measures how similar or two related objects are.

Apart from supervised or semi-supervised learning, unsupervised learning may be used to train the machine-learning model. In unsupervised learning, (only) input data may be supplied and an unsupervised learning algorithm may be used to find structure in the input data (e.g. by grouping or clustering the input data, finding commonalities in the data). Clustering may refer to an assignment of input data including a plurality of input values into subsets (clusters) so that input values within the same cluster are similar according to one or more (pre-defined) similarity criteria, while being dissimilar to input values that are included in other clusters.

Reinforcement learning may refer to another group of machine-learning algorithms. In other words, reinforcement learning may be used to train the machine-learning model. In reinforcement learning, one or more software actors (called "software agents") may be trained to take actions in an environment. Based on the taken actions, a reward may be calculated. Reinforcement learning is based on training the software agents to choose the actions such that the cumulative reward is increased, leading to software agents that become better at the task they are given (as evidenced by increasing rewards).

Furthermore, additional techniques may be applied to some of the machine-learning algorithms. For example, feature learning may be used. In other words, the machine-learning model may at least partially be trained using feature learning, and/or the machine-learning algorithm may include a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

For example, the machine-learning model may be an Artificial Neural Network (ANN). ANNs are systems that are inspired by biological neural networks, such as can be found in a retina or a brain. ANNs include a plurality of interconnected nodes and a plurality of connections, so-called edges, between the nodes. There may be three types of nodes, input nodes that receive input values, hidden nodes that are (only) connected to other nodes, and output nodes that provide output values or data. Each node may represent an artificial neuron. Each edge may transmit information from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an ANN may include adjusting the weights of the nodes and/or edges of the ANN, i.e., to achieve a desired output for a given input.

Alternatively, the machine-learning model may include a different structure and, e.g., be a support vector machine, a random forest model or a gradient boosting model. Alternatively, the machine-learning model may be based on a genetic algorithm, which is a search algorithm and heuristic technique that mimics the process of natural selection.

In examples, the machine-learning model may be a combination of any of above examples.

Returning to Fig. 1, the method 100 includes receiving, by a prompt gateway, a first prompt corresponding to a request of a client in the network. The client may be any entity in the network or any network participant that directly or indirectly communicates with the prompt gateway. For example, the client may be a UE that requests a certain service in the network (such as video streaming, phone call, autonomous driving, or the like). On the other hand, the client may be any network layer (such as (a part of) a core network, (a part of) a transport network, (a part of) a radio access network, (a part of) a network management layer, or the like), or (a part of) a network provisioning chain. The prompt may correspond to a request of the client, e.g., a request for network resources, or in other words, the prompt may correspond to an intent of the client. According to the present disclosure, an "intent" may refer to a high-level expression of a desired outcome or service requirement without specifying the technical details. The network may interpret and autonomously configure itself to fulfill the client's intent, optimizing resources and performance. The prompt may be multimodal, i.e., the prompt gateway may be configured to receive a first prompt of multiple input modalities, such as text, speech, images, videos, computer code, script language, or the like.

The method further includes identifying, 120, based on the first prompt, at least one action to be taken for at least one of a UE or at least one network layer. Hence, a target of the action may be the same as the client that provided the first prompt, in some examples, or it may be different. Also, multiple targets of the action may be identified to fulfill the quest. For example, the first prompt may be used to identify which measures may need to be taken in order to fulfill the intent/request. The action may include an adaptation or an adjustment of at least one parameter of a network layer, e.g., to effect planning of resources, scheduling, network slicing, handover, or the like. Furthermore, the action may be an action for the UE, e.g., to wait, to try an alternative approach (if no sufficient resources are available), to connect to a different network, to try a different connection technology (e.g., LTE instead of 5G), or the like.

The method further includes generating, 130, by the prompt gateway, at least one second prompt for at least one of the UE or a network layer agent provided for the at least one network layer for invoking the at least one action. As indicated above, a network layer may be provisioned with a network layer agent. Hence, if the action is to be taken in the network layer, the second prompt may be provided to the respective agent. The network layer agent may interpret the prompt and adjust its network layer accordingly. For example, an action for the network management layer may include a change of policies, quality of service (QoS) requirements, or the like. For example, an action for a media access control (MAC) layer may include a change of scheduling. It should be noted that the present disclosure is not limited to any network entity or layer. It should further be noted that the term "layer" should be understood broadly and may encompass entities that implement multiple OSI (open system interconnection) layers, such as the RAN, core network, applications services, or the like. Accordingly, if the network functions according to the OSI model, a dedicated agent may be provided for each layer, or a dedicated agent may be provided for each infrastructure component implementing the respective OSI layers.

In some examples, each network layer (or each infrastructure component, such as RAN, core network, application services, or the like) is provided with a network layer agent and the generating of the at least one second prompt comprises generating a respective second prompt for all or a subset of the network layer agents. For example, a subset of network layers may be identified for the action and a corresponding subset of network layer agents may be chosen.

In some examples, the prompt gateway is configured to invoke a large language model for at least one of the identifying the at least one action and generating the at least one second prompt. As mentioned above, different models may be used for different prompts. This may depend on the action and on the second prompt(s) that are to be generated. If two network agents are prompted with second prompts, these two second prompts may be generated based on different models since the two network agent may be embodied differently.

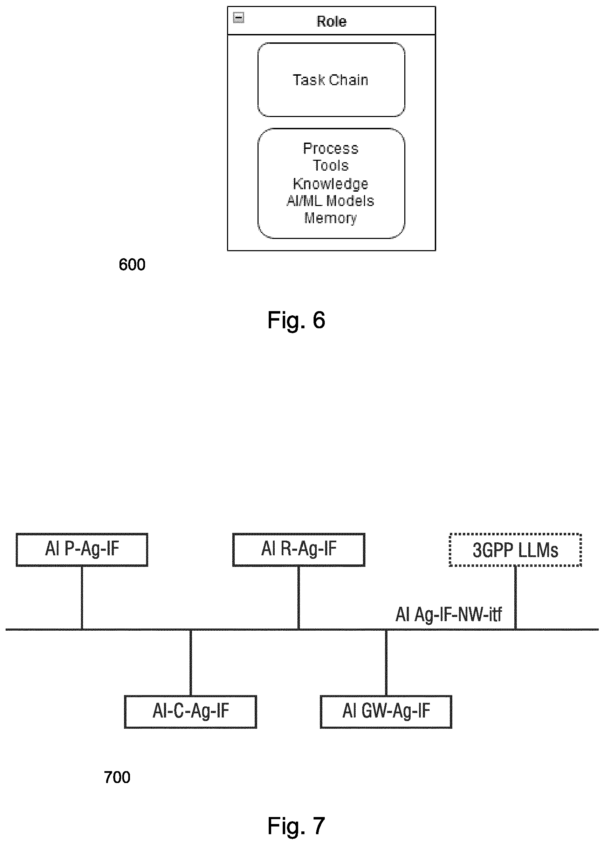

In some examples, the method 100 further includes determining a processing chain of the at least one second prompt. The processing chain may indicate an order of network layer agents to process the at least one second prompt. In other words, a (single) second prompt may be generated, but this second prompt may be destined for different network agents. For example, a first network agent may receive the second prompt directly and generate another second prompt to be input into a second network agent. Thereby, functional chaining may be carried out. Furthermore, the second prompt generated by the gateway may indicate the processing chain and instructions for the first agent two generate the other second prompt. In some examples, the processing chain is determined by a management network layer agent provided for a management network layer. Functional chaining will be further discussed under reference of Figs. 6 and 7.

As indicated above, in some examples, the first prompt is generated based on an intent of the UE. There may be different ways of how the UE may generate the intent. For example, a user of the UE may input speech or text and the UE is configured to transmit this input as a prompt. On the other hand, the UE may include processing circuitry configured to recognize the intent and to generate an appropriate prompt for the gateway. In such examples, the UE may be configured to invoke a LLM in a similar way as discussed above for the gateway. In such an example, the gateway does not necessarily invoke an LLM, but may be specifically trained to receive ("understand") prompts generated by the UE. On the other hand, the processing circuitry of the UE may determine whether the user opens (or is about to open) an application that needs specific service requirements (such as video streaming, augmented/virtual reality, phone call, or the like) and transmit an according prompt to the gateway (i.e., without an explicit command from the user). It should be noted that the UE is not limited to being a user terminal (e.g., a smartphone, a smart headset, a smart watch), or the like, but may also be a robot (e.g., in a factory network or in a household), a smart car, or the like.

Fig. 2 depicts a block diagram method 200 for a UE. The method 200 includes generating, 200, based on a service request of the UE, a prompt for a prompt gateway of a telecommunications network for determining at least one action in the telecommunications network.

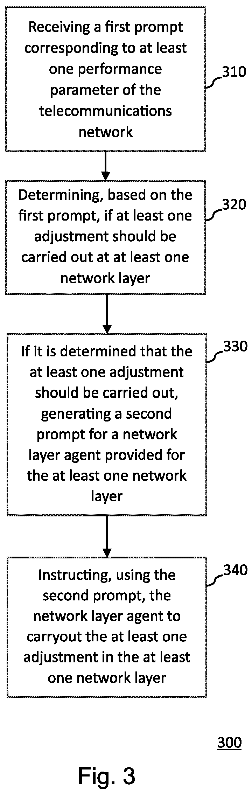

Fig. 3 depicts a flowchart of a method 300 for adjusting at least one setting in a telecommunications network. In this example, the network may autonomously surveil and manage its resources based on a similar architecture as discussed under reference of Fig. 1 (and as will be discussed under reference of the following figures), such that a repetitive discussion is omitted and it is referred to the explications given above or below.

The method 300 includes receiving, 310, a first prompt corresponding to at least one performance parameter of the telecommunications network. A performance parameter may refer to a measurable criterion used to evaluate and quantify the network's efficiency, reliability, quality of service (QoS), and the like. Such a parameter may be used to monitor network behavior, ensure compliance with service-level agreements (SLAs), optimize network performance, or the like. Common performance parameters may be related to data transmission speed, latency, reliability, and capacity. By analyzing these parameters, bottlenecks may be identified and user experience may be improved. Any performance parameter may be used, such as standardized or well-known performance parameters, such as latency, throughput, packet loss, jitter, signal-to-noise ratio, or the like, but the present disclosure is not limited in that regard. For example, a machine-learning model may be used to determine network performance and therefore, performance parameters may be implicit parameters as well. In such an example, the first prompt corresponds to the at least one performance parameter. The first prompt may be directly the performance parameter (e.g., with minimum context and generated based on known performance measurement circuitry) or it may be a prompt generated by a machine-learning model that surveils the network performance. The performance parameter may be steadily supplied and it may be determined that no change is necessary since performance is above a predetermined threshold.

Thus, in some examples, the method 300 further includes determining, 320, based on the first prompt, if at least one adjustment should be carried out at at least one network layer. An adjustment may be indicated if a performance parameter is below a certain (e.g., predetermined, or dynamically determined) threshold (which may also be an implicit threshold for the machine-learning model). In other words, it may be determined that at least one adjustment should be carried out, if it is expected that the adjustment leads to an increase in performance.

For example, an adjustment may be carried out to radio resource management parameters, core network parameters, transport network parameters, application layer parameters, or the like. For example, radio resource management parameters may include transmission power, handover thresholds, scheduling algorithms (or parameters thereof), carrier aggregation configurations, interference coordination parameters (such as interference mitigation setting), or the like. For example, core network parameters may include quality of service parameters (or classes), buffer sizes, load balancing parameters, session timeout values, congestion control algorithms (or parameters thereof), or the like. For example, transport network parameters may include packet forwarding priorities, traffic policing and shaping, redundancy protocols, maximum transmission unit settings, or the like. For example, application layer parameters may include caching and compression parameters, adaptive bitrate streaming parameters, domain name system resolution timeouts, or the like. Also, combinations of any adjustment maybe carried out.

If it is determined that the at least one adjustment should be carried out, the method 300 further includes generating, 330, a second prompt for a network layer agent provided for the at least one network layer.

The method 300 further includes instructing, 340, using the second prompt, the network layer agent to carry out the at least one adjustment in the at least one network layer.

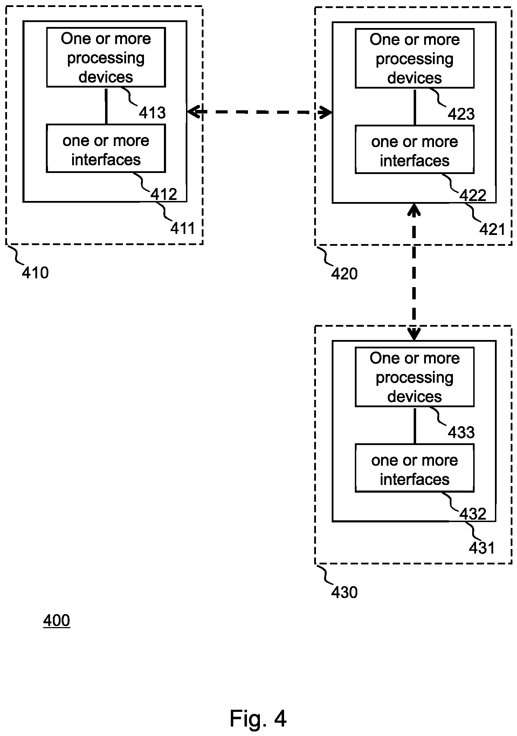

Fig. 4 depicts a telecommunications network 400 according to the present disclosure including optional examples of a UE 410, a base station 420, and a core network 430. It should be noted that such a network configuration is only shown for illustrative purposes and the present disclosure should not be understood as limiting in that regard.

The UE 410 of the mobile communication system 400 includes circuitry 411 (also referred to as an apparatus for a UE), e.g. including one or more interfaces 412, which are configured to communicate in the mobile communication system 400. The one or more interfaces 412 are coupled to one or more processing devices (also referred to as processing circuitry in the present disclosure) 413, which may be configured to perform one of the methods described herein.

The base station 420 of the mobile communication system 400 may include circuitry 421 (also referred to as an apparatus for determining and action and/or an apparatus for adjusting at least one setting in the telecommunications network) including one or more interfaces 422, which may be configured to communicate in the mobile communication system 400. The one or more interfaces 422 are coupled to one or more processing devices (or processing circuitry) 423, which may be configured to perform one of the methods described herein.

The core network 430 of the mobile communication system 400 may include circuitry 431 (also referred to as an apparatus for determining and action and/or an apparatus for adjusting at least one setting in the telecommunications network) including one or more interfaces 432, which may be configured to communicate in the mobile communication system 400. The one or more interfaces 432 may be coupled to one or more processing devices (or processing circuitry) 433, which may be configured to perform one of the methods described herein.

It should be noted that the apparatus for determining an action and the apparatus for adjusting at least one setting in the telecommunications network may be implemented by the same entity, e.g., one processor capable of both functions. On the other hand, the apparatus may be distributed among different network nodes, e.g., in the base station, in the transport network, in the core network, or the like, or for each network infrastructure/node/entity/layer, a separate apparatus may be provided. In an alternative example, any of the apparatuses may be provided in a remote server configured to communicate with the respective network nodes/entities/infrastructure/layers. In an alternative example, the methods described herein may partially be carried out remote/central and partially locally at the respective network node/entity/infrastructure/layer. For example, the prompt gateway may be a central instance, such as a remote/central server, and a network layer agent may be provided locally at the respective network layer.

As illustrated in Fig. 4, the respective one or more processing devices (or circuitry) 413, 423, and 433 are coupled to the respective one or more interfaces 412, 422, and 432, but the connection depicted in Fig. 4 should be not understood as limiting. The one or more interfaces 412, 422, and 432 may correspond to one or more inputs and/or outputs for receiving and/or transmitting information, which may be in digital (bit) values according to a specified code or protocol, within a module, between modules or between modules of different entities. For example, an interface 412, 422, and/or 432 may comprise interface circuitry configured to receive and/or transmit information/data. In examples, an interface 412, 422, 432 may correspond to any means for obtaining, receiving, transmitting or providing analog or digital signals or information, e.g., any connector, contact, pin, register, input port, output port, conductor, lane, etc., which allows providing or obtaining a signal or information. An interface 412, 422, 432 may be configured to communicate (transmit, receive, or both) in a wireless or wireline manner and it may be configured to communicate, i.e., transmit and/or receive signals, information with further internal or external components. The one or more interfaces 412, 422, 432 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices (or processing circuitry) 413, 423, 433 may be implemented using one or more processing units, one or more circuitries, any means for processing, such as one or more processors, one or more computers, one or more programmable hardware components being operable with accordingly adapted software. In other words, the described function of the one or more processing devices 413, 423, 433 may as well be implemented in software, which may then executed on one or more programmable hardware components. Such hardware components may comprise a general-purpose processor, a Digital Signal Processor (DSP), a micro-controller, a computer, a processor, a control unit, a (field) programmable logic array ((F)PLA), a (field) programmable gate array ((F)PGA), a graphics processing unit (GPU), a central processing unit (CPU), a neural processing unit (NPU), an application-specific integrated circuit (ASIC), an integrated circuit (IC), a system-on-a-chip (SoC) system, or the like.

A network entity/node according to the present disclosure, may be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, a gNodeB, a BTS (Base Transceiver Station), an access point, etc.

The mobile communication system 400 may be cellular. The term cell may refer to a coverage area of radio services provided by a transmission point, a remote unit, a remote head, a remote radio head, communication device, network entity or a NodeB, an eNodeB, a gNodeB, respectively. The terms cell and base station may be used synonymously, a base station may generate multiple (at least one) cells. A wireless communication device, can be registered or associated with at least one cell (e.g., the network entity), e.g., it can be associated to a cell such that data can be exchanged between the network and the mobile in the coverage area of the associated cell using a dedicated channel, connection or link.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

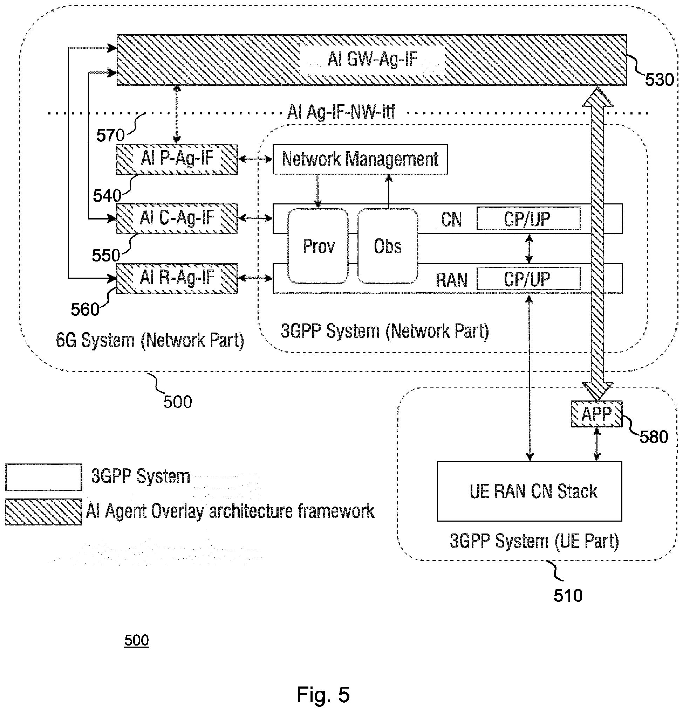

Fig. 5 depicts an example of a telecommunications network 500 and a UE 510 according to the present disclosure. The network 500 includes a "standard" telecommunications network (3GPP system) 520 and an apparatus for a telecommunications network 530. The apparatus 530 may be an apparatus for determining an action and/or an apparatus for adjusting at least one setting in the telecommunications network 500. In this example, the apparatus 530 is also called Al GW-Ag-IF (artificial intelligence gateway agent infrastructure), i.e., it may fulfill functions of a prompt gateway, as discussed herein.

The network 500 further includes network layer agents 540, 550, and 560, which may be part of the apparatus or which may be implemented by separate circuitry, as discussed above.

The agent 540 is also called Al P-Ag-IF (artificial intelligence provisioning agent infrastructure). The agent 550 is also called Al C-Ag-IF (artificial intelligence core network agent infrastructure). The agent 560 is also called Al R-Ag-IF (artificial intelligence random access network agent infrastructure). It should be noted that also other agents may be provided, as discussed above. Moreover, the apparatus 530 is connected to the agents via an Al Ag-IF-NW-itf (artificial intelligence agent infrastructure network interface) 570 (indicated with a dotted line) for prompt transmission between the agent infrastructures and transmission of LLM request and responses.

The apparatus 530 may further be configured for at least one of receiving, pre-processing, authenticating, storing and routing multimodal prompts to the appropriate agent 540 to 560 via the interface 570. The apparatus 530 may constitute a (single) point of prompting, authentication, authorization, information element extraction, routing to other agents, and storing of prompts.

The agent 540 may be configured for at least one of receiving provisioning specific prompts, pre-processing and conducting task/processing chains based on the defined agents in the infrastructure. The agent 540 may receive (only) internal prompts and may thus, not be accessible from outside of the network infrastructure. Moreover, the agent 540 may be configured for LLM calls, RAG operations, task chaining (also planning of task chaining), access to provisioning data sources, and network management data sources.

The agent 550 may be configured for at least one of autonomously optimizing the core network and providing analytics and core network specific data to other agents and/or the apparatus 530, e.g., via corresponding application programming interfaces (APIs). The agent 550 may be further configured to receive (only) internal prompts and may thus, not be accessible from outside of the network infrastructure. Moreover, the agent 550 may be configured for LLM calls, RAG operations, task chaining (also planning of task chaining), access to core network data sources and network analytics data sources.

The agent 560 may be configured for at least one of autonomously optimizing the radio access network and providing analytics and specific data to other agents and/or the apparatus 530, e.g., via corresponding APIs. The agent 560 may be further configured to receive (only) internal prompts and may thus, not be accessible from outside of the network infrastructure. Moreover, the agent 550 may be configured for LLM calls, RAG operations, task chaining (also planning of task chaining), access to RAN data sources and RAN analytics data sources.

The UE 510 includes processing circuitry 580 (APP - implemented as an application, e.g., on a smartphone, but the present disclosure is not limited in that regard) configured to generate prompts for the apparatus 530, as discussed herein. Since the present disclosure is based on prompting to the network, the underlying infrastructure of the network may be hidden from the UE. The processing circuitry 580 is configured to have access to the apparatus 530 (i.e., the gateway), e.g., based on an appropriate API key, such that the UE may be authorized and authenticated for sending and receiving prompts from the network.

As indicated above, the network 500 includes different infrastructure elements which is depicted as a high-level view of the network.

The central element in the network part is the Network Management function which is configured to communicate with the agent 540 and with provisioning and observation circuitry provided in the core network (CN) and the radio access network (RAN). The provisioning circuitry may be responsible for configuring network parameters, setting up resources, ensuring that policies are correctly implemented, and the like. the observation circuitry may continuously monitor network performance, collect operational data, and support troubleshooting, performance optimization, capacity planning, and the like.

Below the management functions, the diagram illustrates the CN, which implements a control plane (CP) and a user plane (UP). The CP may handle signaling, mobility management, session control, and the like, ensuring that the network maintains stable connections and properly routes control information. The UP may be tasked with the actual transportation of user data, managing the routing and forwarding of data packets between the UE and external networks.

Adjacent to the CN, the RAN is depicted, which is also split into CP and a UP. The RAN's CP may be responsible for managing radio resources, handling connection establishment, and coordinating with the UE to maintain communication links. Meanwhile, the RAN's UP may deal with the transmission of actual user data over the air interface, ensuring efficient and reliable data delivery between the base station and the UE.

Moreover, the UE includes a UE RAN CN Stack, which may represent the protocol stack implemented in the user equipment. This stack may be designed to seamlessly interface with both the RAN and the CN, enabling the UE to process control signals and handle data transmission in a manner that aligns with the network's operations.

Fig. 6 depicts a high-level diagram of a network layer agent 600 according to the present disclosure.

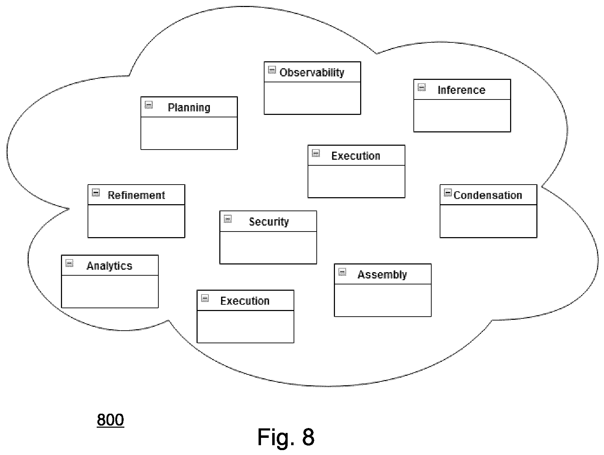

An agent according to the present disclosure, such as the agent 600, may be imagined as a character or person with specific capabilities and roles (e.g., planning, assembly, inference, execution, refinement, etc., also also depicted in Fig. 8) and may be able to execute a certain multistep task (task chain as depicted in Fig. 7) independently or in collaboration with another agent, e.g., by receiving and interpreting intents (or prompts), sophisticated reasoning, planning, assembling, observing, making decisions, or the like.

A task chain (or processing chain) may be interpreted as a sequence of processing steps for input prompts, thus defining how the agent processes information.

The tools, as depicted in Fig. 6, may refer to specialized functionalities that may be used by agents or within chains for specific tasks. Processing within an agent may depend on its role and may thus differ from service scenario to service scenario. Following tools may be used (without limiting the present disclosure in that regard):
- Processing tools: Tools which process the input prompts and filter the relevant information elements, e.g., with prompt templates. The extracted parts of the prompt may be stored in a format like json, XML, or the like. The information may be interpreted like information elements in 3GPP protocol stacks.
- APIs: For example, document loaders/chunking libraries, web APIs, but also APIs from the mobile network domain in order to retrieve data which might be beneficial for the Al agent role and task chain completion.
- Knowledge may be gained by utilization of the (json or XML formatted) information elements by accessing vector or knowledge database APIs in order to enrich the information elements for an LLM API call, for example. Such RAG scenarios (RAG: retrieval-augmented generation) may be integrated into the task chain.
- Al/ML models may be utilized, e.g., via API calls. In agentic Al, the API calls to an LLM may be of particular interest. For example, different LLMs per domain may be used and/or may overarch the different domains. Thus, different LLMs may be called during the task chain depending on the problem to be solved (with different task specific prompts). They may be called locally or via APIs.
- Memory (short term and long term). The agent may store all incoming requests (short term, including feedback) and may condense in a regular time interval the prompts in order to be stored long term (e.g., via condensation agent call). The long term memory may be important to operators because it may contain knowledge such that LLMs may be retrained or fine-tuned and improved from this knowledge. This may differentiate operators from each other.

As mentioned above, LLM calls may be utilized within or outside the operator domain (API, API-Key). If the LLM is developed and operated in the operator domain, access is granted via the interface 570, as depicted in Figure 7. In Fig. 7, the case of functional/tool chaining is depicted. Functional chaining may refer to a process that allows the network to perform specific operations on the network traffic as it traverses the system. Functional chaining may enable the implementation of various network services, such as firewalls, load balancers, and intrusion detection systems, in a flexible and scalable manner. This approach might not only improve security and performance but also simplify deployment and management of these services. Functions such as traffic inspection, anomaly detection, and encryption may be embedded within the network through functional chaining, thus providing robust protection mechanisms. In Fig. 7, a prompt is passed through different infrastructure after one another, i.e., the AI P-Ag-IF, the AI-C-Ag-IF, the Al R-Ag-IF, the Al GW-Ag-IF, and finally at least one LLM.

Fig. 8 depicts a white box view of a network layer agent 800 (or Al agent infrastructure) according to the present disclosure. Fig. 8 depicts exemplarily defined roles and tasks of an exemplary agent of the present disclosure. As mentioned above, tasks may depend on a role of the agent. In this example, the tasks include at least one of observability, inference, planning, execution, condensation, refinement, security, assembly, and analytics. The design of the infrastructure may be subject to operator or supplier requirements. The mobile operator may open the infrastructure for third party developers which may program the infrastructure for an End to End (E2E) use case including UEs. Due to the white box approach with existing open source frameworks, the functionality can easily be understood and traced.

The present disclosure may enable agent infrastructure based multimodal communication scenarios. The architecture of the implementation may depend on a use case or communication scenario, such as management and orchestration, domain specific optimization, vertical applications support (e.g. V2X, Robotics, loT etc.), or the like.

The gateway may be the entry point for all requests. From application perspective, the gateway may be interrogated according to the needs of the application (of the UE). It may be too complex to describe all chains within one agent and the agent communication infrastructure and flow as such. The infrastructure and the agent task chains may be highly flexible for programming and use case dependent.

According to the present disclosure, better customer experience may be achieved because the customer may directly experience the human centric requirements provided by the technical experience of the system (e.g., compared to static rules which are not necessarily human centric). Also, it may be easier to observe and evaluate complex network scenarios with the support of human readable or at least better understandable traces. The network may even autonomously solve issues when "observing the network", e.g., based on intelligent reasoning and feedback loops.

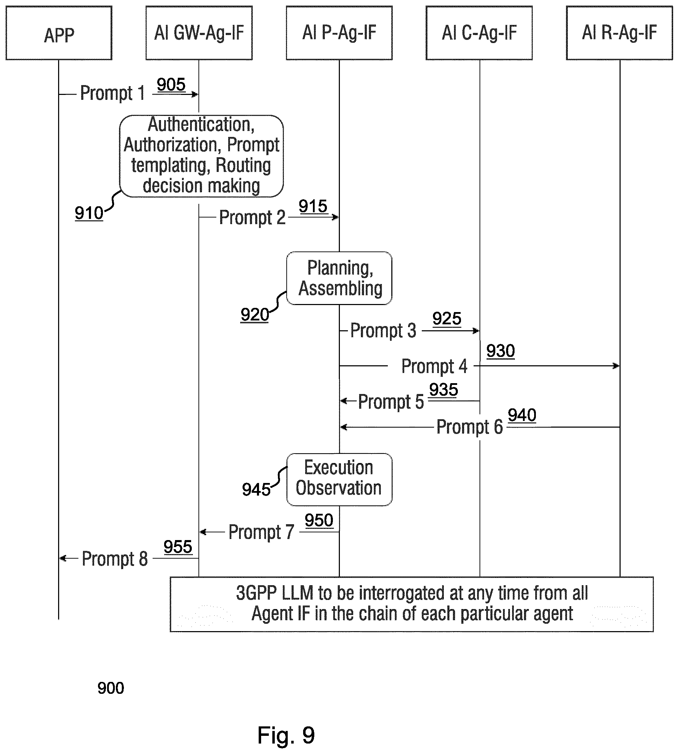

Many use cases may be present. In the following, an exemplary use case is discussed under reference of Fig. 9 which depicts a sequence diagram of a method 900 according to the present disclosure.

The method 900 includes sending, 905, a first prompt (prompt 1) from an APP of a UE to a gateway. At 910, the gateway authenticates and authorizes the UE, evaluates prompt 1 based on a prompt template, and carries out routing and decision making based on prompt 1. In turn, the gateway sends, 915, a second prompt (prompt 2) to a provisioning agent, which carries out planning (of resources) and assembling, 920. Based on the planning and assembling, the provisioning agent sends, 925, a third prompt (prompt 3) to a core network agent and sends, 930, a fourth prompt (prompt 4) to a RAN agent. The core network agent responds, 935, with a fifth prompt, and the RAN agent responds, 940, with a sixth prompt to the provisioning agent. The provisioning agents evaluates these prompts at 945 and generates a seventh prompt (prompt 7) and sends, 950, this prompt to the gateway. Based on prompt 7, the gateway generates an eighth prompt and sends, 955, this prompt as an answer to the UE.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method for determining an action in a telecommunications network, the method comprising:
receiving, by a prompt gateway, a first prompt corresponding to a request of a client in the network;
identifying, based on the first prompt, at least one action to be taken for at least one of a UE or at least one network layer;
generating, by the prompt gateway, at least one second prompt for at least one of the UE or a network layer agent provided for the at least one network layer for invoking the at least one action.

2. The method of claim 1, wherein each network layer is provided with a network layer agent and the generating of the at least one second prompt comprises generating a respective second prompt for all or a subset of the network layer agents.

3. The method of claim 1 or 2, wherein the prompt gateway is configured to invoke a large language model for at least one of the identifying the at least one action and generating the at least one second prompt.

4. The method of any one of claims 1 to 3, further comprising:
determining a processing chain of the at least one second prompt, the processing chain indicating an order of network layer agents to process the at least one second prompt.

5. The method of claim 4, wherein the processing chain is determined by a management network layer agent provided for a management network layer.

6. The method of any one of claims 1 to 5, wherein the at least one network layer agent is based on a machine-learning model.

7. The method of any one of claims 1 to 6, wherein the first prompt is generated based on an intent of the UE.

8. A method for adjusting at least one setting in a telecommunications network, the method comprising:
receiving a first prompt corresponding to at least one performance parameter of the telecommunications network;
determining, based on the first prompt, if at least one adjustment should be carried out at at least one network layer;
if it is determined that the at least one adjustment should be carried out, generating a second prompt for a network layer agent provided for the at least one network layer; and
instructing, using the second prompt, the network layer agent to carry out the at least one adjustment in the at least one network layer.

9. An apparatus for determining an action in a telecommunications network, the apparatus comprising processing circuitry configured to:
receive, by a prompt gateway, a first prompt corresponding to a request of a client in the network, UE;
identify, based on the first prompt, at least one action to be taken for at least one of a UE or at least one network layer;
generate, by the prompt gateway, at least one second prompt for at least one of the UE or a network layer agent provided for the at least one network layer for invoking the at least one action.

10. The apparatus of claim 9, wherein each network layer is provided with a network layer agent and the generating of the at least one second prompt comprises generating a respective second prompt for all or a subset of the network layer agents.

11. The apparatus of claim 9 or 10, wherein the prompt gateway is configured to invoke a large language model for at least one of the identifying the at least one action and generating the at least one second prompt.

12. The apparatus of any one of claims 9 to 11, wherein the processing circuitry is further configured to:
determine a processing chain of the at least one second prompt, the processing chain indicating an order of network layer agents to process the at least one second prompt.

13. The apparatus of claim 12, wherein the processing chain is determined by a management network layer agent provided for a network management layer.
ß

14. An apparatus for adjusting at least one setting in a telecommunications network, the apparatus comprising processing circuitry configured to:
receive a first prompt corresponding to at least one performance parameter of the telecommunications network;
determine, based on the first prompt, if at least one adjustment should be carried out at at least one network layer; and
if it is determined that the at least one adjustment should be carried out, generate a second prompt for a network layer agent provided for the at least one network layer; and
instruct, using the second prompt, the network layer agent to carry out the at least one adjustment in the at least one network layer.

15. A telecommunications network comprising an apparatus according to any one of claims 9 to 13 and/or according to claim 14.
